# EUROPEAN PATENT SPECIFICATION

(11) **EP 0 343 754 B1**
(45) Date of publication and mention of the grant of the patent: **20.04.1994**
(21) Application number: 89201331.9
(22) Date of filing: 23.05.1989
(51) Int. Cl.: H02G 3/18

(54) **Junction box attachment device**
Anschlussdosenbefestigungsvorrichtung
Système d'attache pour boîte de jonction

(30) Priority: 24.05.1988 NL 8801337
(43) Date of publication of application: 29.11.1989
(73) Proprietor: VAN GEEL SYSTEMS B.V., NL-5281 RS Boxtel (NL)
(72) Inventor: Van Geel, Jacobus Antonius Peter, NL-5281 JT Boxtel (NL)
(74) Representative: Hoijtink, Reinoud

(56) References cited:
- GB-A- 1 402 267
- US-A- 4 536 612

## Description

The invention relates to a junction box for connection to a cable duct arranged under a floor, comprising a carpet closure frame, a box shaped attachment frame connected thereto, a fitting box with terminal connectors mounted in said attachment frame, a through-connection member having terminal connectors for connection to a cable in a cable duct and connecting elements for through-connection to said terminal connectors of said fitting box.

Such a junction box is known from US-A-4,536,612 and is used for connection to a cable running under the floor of for example a socket box or suchlike plug contract. For use an opening is arranged in the floor and the junction box is placed such that its upper side comes to lie as much as possible in one plane with the floor-covering, for example a carpet. Located in the junction box is an attachment frame wherein a fitting box can be placed which serves for the accommodation of for example a socket box. In the place of use, the, for example, socket boxes are mounted in the fitting box, the fitting box is subsequently placed in the attachment frame and thereafter a through-connection is made between the cable and the various terminal connectors of the socket box or boxes. In practice a number of socket boxes are usually arranged in the fitting box. The above mentioned through-connection with the cable has to be carried out in the assembled state of the junction box. The operations in question therefore take place partly under the surface of the floor, which is time-consuming and difficult. Should a large number of socket boxes have to be mounted, which entails a large number of through-connections, these operations become very time-consuming and tiring.

The object of the invention is to offer a solution therefor. This is achieved according to the invention as defined in Cl. 1 by the feature that said connection member is mounted directly onto said fitting box to form an integral part thereof and, when in use, it protrudes outwardly of said attachment frame to facilitate the connection to said cable.

As a result of this step, the, for example, socket boxes can be mounted beforehand in the fitting box and the required mutual through-connections can be made. The through-connection member is also connected to the, for example, socket boxes in the fitting box. This pre-assembly can take place in the factory or workshop, that is, under favourable working conditions. At the place of use it will suffice to connect the cable to the terminal connectors of the through-connection member. Because the through-connection member is arranged outside the attachment frame no valuable space within the fitting box is lost. The invention does not therefore limit the maximum number of, for example, socket boxes to be arranged.

The through-connection member is preferably detachably connected to the fitting box using for example screws. The connecting elements can be formed by pre-installed wiring.

The invention will be elucidated with reference to an embodiment.

In the drawings:
Fig. 1 shows a perspective view with dismantled parts of a junction box according to the invention,

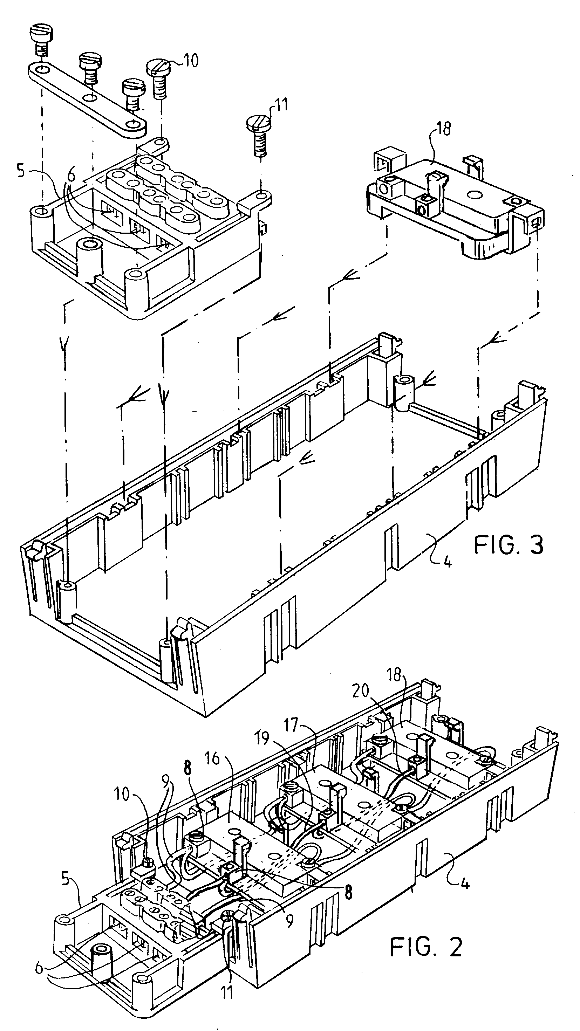

Fig. 2 is a perspective view of a fitting box with the through-connection member according to the invention,
Fig. 3 shows the fitting box with through-connection member according to fig. 2 with dismantled parts in perspective view and,

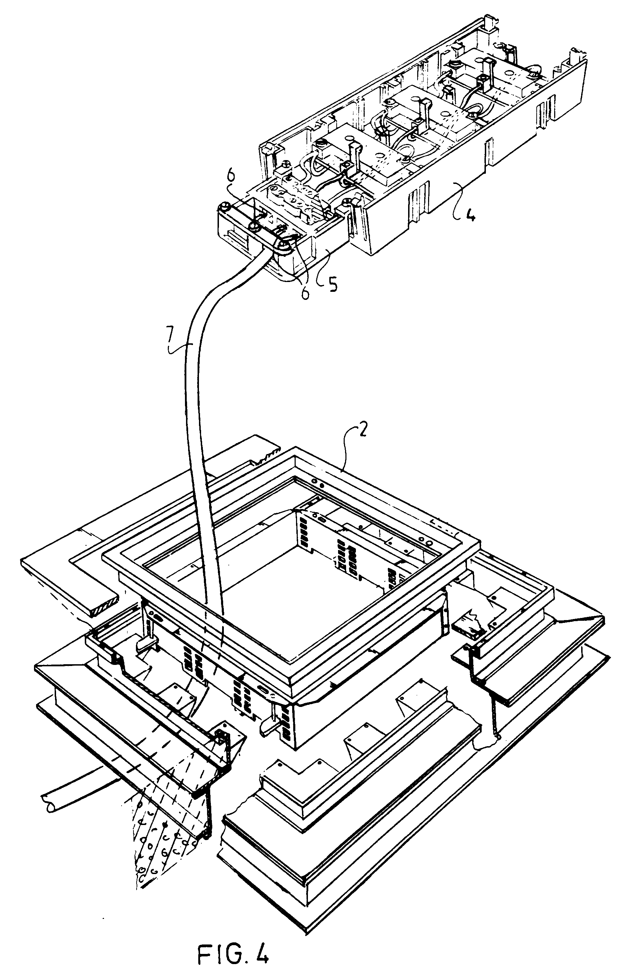

Fig. 4 shows a perspective view of the connection to a cable with the associated junction box.

Since the junction box as such is known in the trade, it will not be described in detail.

The junction box 1 comprises a carpet closure frame 2 in addition to a box shaped attachment frame 3 connected thereto. A fitting box 4 can be mounted in the attachment frame 3. Socket box elements can be arranged in the fitting box. The junction box can be closed using the cover 12, which can swivel between an open and a closed position. The user can insert a plug into the socket box which is arranged in the fitting box 4. When the cover 12 is closed the connecting cord of the plug is guided outwards to a user appliance via the valve opening 13. The valve is formed in two parts 14 and 15 whereby valve part 15 is pivotable relative to valve part 14. Because of the valve part 15 a downward pressing force on the connecting cord is achieved so that it does not form an obstacle in the area of use.

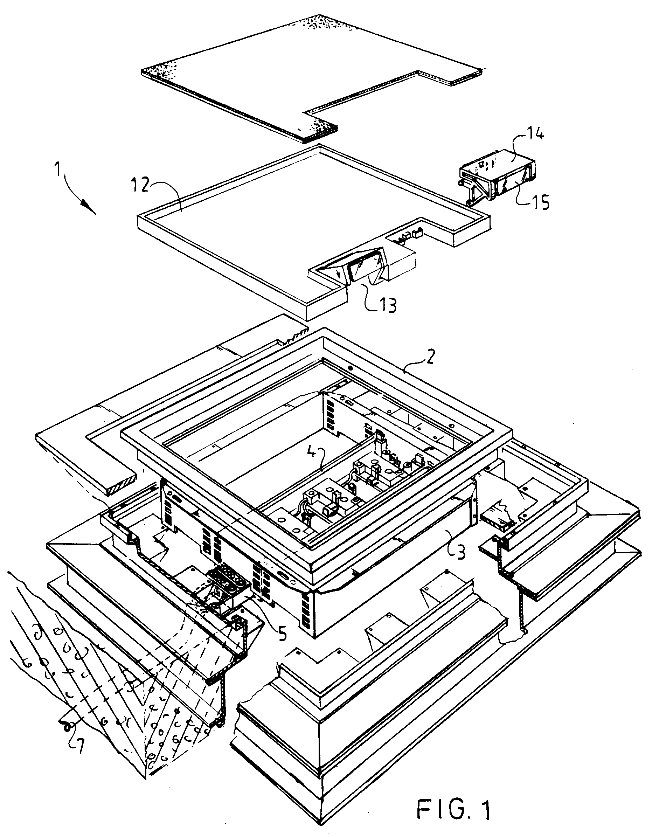

According to the invention a through-connection member 5 is arranged on the fitting box 4 for example using the screws 10, 11. In the position of use (see fig. 1) the through-connection member 5 protrudes out of the attachment frame 3 so that it takes up no space which is intended for the fitting box within the attachment frame. The through-connection member displays terminal connectors 6 for the connection to the supply cable 7 which is laid in a cable duct under the floor. Connecting elements 9 in the form of wiring are also present for the connection with for example the socket boxes 16, 17 in the fitting box 4. As a result of the invention the socket boxes 16, 17, 18 and the through-connection wiring, for example 19, 20, can be pre-installed in the fitting box 4. The through-connection member 5 is also arranged on the fitting box 4 using the screws 10, 11 and through-connection to the fitting box 4 is provided using the wiring 9. At the place of use it is then only necessary to connect the cable to the terminal connectors 6 of the through-connection member 5. The box 4 is subsequently arranged in the attachment frame 3 at the required height. It is further noted that various types of connection elements, for example socket boxes and the like, are arranged to choice in the fitting box. It is also possible to place multiple fitting boxes in the attachment frame 3.

## Claims

1. Junction box (1) for connection to a cable duct arranged under a floor, comprising a carpet closure frame (2), a box shaped attachment frame (3) connected thereto, a fitting box (4) with terminal connectors (8) mounted in said attachment frame (3), a through-connection member (5) having terminal connectors (6) for connection to a cable (7) in a cable duct and connecting elements (9) for through-connection to said terminal connectors (8) of said fitting box (4), characterized in that said connection member (5) is mounted directly onto said fitting box (4) to form an integral part thereof and, when in use, it protrudes outwardly of said attachment frame (3) to facilitate the connection to said cable (7).

2. Junction box as claimed in claim 1, characterized in that the through-connection member (5) is detachably connected to the fitting box (4).

3. Junction box as claimed in claim 2, characterized in that the through-connection box (5) is connected to the fitting box (4) by means of screws (10, 11).

4. Junction box as claimed in claim 1, characterized in that the connecting elements (9) are pre-installed wires (9).

## Patentansprüche

1. Verteilerdose (1) zum Anschluß an einen unter einem Boden angeordneten Kabelschacht mit einem Teppich-Verschlußrahmen (2), einem damit verbundenen dosenförmigen Befestigungsrahmen (3), einer Einbaudose (4) mit Anschlußkontakten (8), die im Befestigungsrahmen (3) montiert ist, einem Zwischen- bzw. Durchgangsverbindungsglied (5) mit Anschlußkontakten (6) für die Verbindung mit einem Kabel (7) in einem Kabelschacht und Verbindungselementen (9) für eine Zwischenverbindung mit den Anschlußkontakten (8) der Einbaudose (4), dadurch gekennzeichnet, daß das Verbindungsglied (5) direkt an die Einbaudose (4) montiert ist, um einen integralen Teil davon auszubilden, und daß es im Betriebszustand vom Befestigungsrahmen (3) nach außen ragt, um den Anschluß an das Kabel (7) zu erleichtern.

2. Verteilerdose nach Anspruch 1, dadurch gekennzeichnet, daß das Zwischenverbindungsglied (5) lösbar mit der Einbaudose (4) verbunden ist.

3. Verteilerdose nach Anspruch 2, dadurch gekennzeichnet, daß die Zwischenverbindungsdose (5) mit der Einbaudose (4) mittels Schrauben (10,11) verbunden ist.

4. Verteilerdose nach Anspruch 1, dadurch gekennzeichnet, daß die Verbindungselemente (9) vormontierte Leistungen (9) sind.

## Revendications

1. Boîte de jonction (1) pour un raccordement à une gaîne à câble placée sous un sol, comprenant un cadre de fermeture (2) pour revêtement de sol, un boîtier-cadre (3) relié à celui-ci, un support (4) avec des bornes (8) placés dans ce boîtier-cadre (3), un raccord de traversée (5) muni de plots (6) destinés à être connectés à un câble (7) de la gaîne et de liaison (9) pour connecter par traversée ces bornes (8) de ce support (4), caractérisée en ce que ce raccord (5) est monté directement sur ce support (4) pour faire corps avec lui et pour qu'en service il fasse saillie à l'extérieur de ce boîtier-cadre (3) afin de faciliter le branchement à ce câble (7).

2. Boîte de jonction selon la revendication 1, caractérisée en ce que le raccord de traversée (5) est monté amovible sur le support (4).

3. Boîte de jonction selon la revendication 2, caractérisée en ce que le raccord de traversée (5) est monté sur le support (4) à l'aide de vis (10, 11).

4. Boîte de jonction selon la revendication 1, caractérisée en ce que les liaisons (9) sont des fils (9) pré-installés.
